# EUROPEAN PATENT SPECIFICATION

(11) **EP 2 377 267 B1**
(45) Date of publication and mention of the grant of the patent: **06.06.2018**
(21) Application number: 08878625.6
(22) Date of filing: 04.12.2008
(51) Int. Cl.: H04L 9/32, G07C 9/00, H04L 9/08

(54) **KEY ISSUER, KEY CARRIER, ACCESS UNIT AND METHODS PERFORMED IN SAID UNITS**
SCHLÜSSELAUSGEBEN, SCHLÜSSELTRÄGER, ZUGANGSEINHEIT UND IN DEN EINHEITEN AUSGEFÜHRTE VERFAHREN
ÉMETTEUR DE CLÉ, PORTEUR DE CLÉ, UNITÉ D'ACCÈS ET PROCÉDÉS MIS EN UVRE DANS LESDITES UNITÉS

(43) Date of publication of application: 19.10.2011
(73) Proprietor: Saab AB, 581 88 Linköping (SE)
(72) Inventor: SKOGLUND, Karl-Johan, S-602 21 Norrköping (SE); AHLSTRÖM, Henrik, S-602 26 Norrköping (SE)
(74) Representative: Zacco Sweden AB
(86) International application number: PCT/SE2008/051402
(87) International publication number: WO 2010/064966

(56) References cited:
- WO-A2-2005/010685
- GB-A- 2 264 423
- US-A1- 2007 241 861
- US-A1- 2008 209 545

## Description

### TECHNICAL FIELD

The present invention relates to a key issuer for an access system, said key issuer being arranged to issue user keys. The present invention also relates to a key carrier arranged to carry such a user key.

The present invention further relates to an access unit arranged to make access decisions based on the contents of a user key.

The present invention also relates to a method for issuing a user key for use in an access system. The present invention further relates to a method for performing access decisions in an access unit.

### BACKGROUND ART

Access systems of today can be categorized in two different operating principles, either shared key systems or online access systems.

The shared key systems use a single key, wherein all communicating parts have the same key. In the shared key system, anyone with a valid key is admitted. The key can be either electronic or mechanical. The mechanical key is a commonly known example, wherein the lock-cylinder is pre-set. In this example, all users who are authorized to access a location accessible by means of the lock-cylinder have a copy or a sub-key of the same shared mechanical key. This type of system suffers from some security issues, especially when used in a multiuser environment. For example, if a key is lost or stolen, all keys have to be replaced. This results in high maintenance costs. Further, any user can use any key, and there is no authentication of the user. User access can not be logged, since all users have the same key. The keys can further be copied.

The operation of the online access systems is based on verification of key data given by a user against a central authority. This solves many of the problems associated to the previously described system. It is easy to revoke a lost or compromised key, and user authentication can be solved with individual PINs or fingerprints. However, this functionality comes with an additional cost as each lock-unit has to be connected to the central authority.

### SUMMARY OF THE INVENTION

One object of the present invention is to provide an access system wherein at least some of the problems with the above described systems are solved.

This has been achieved by means of a solution, wherein the online link to the central authority has been removed, and instead the user has encrypted user keys for example stored as key files on user memories. Those user keys can only be decrypted by access units of the access system. The user keys comprise a signature so as to enable validation of the integrity of the user key and credential information for verification the user possessing the user key. The credential information comprises for example authentication information such as a PIN or fingerprint.

Each user key is generated for a single access unit or a predetermined set of access units and is limited to a single user. Accordingly, the user needs one user key for each access unit or each set of access units by means of which a location is to be accessed. A generic memory can be used for holding the user keys. There is little value in stealing the user keys as they are worthless without the user credentials. Furthermore, the user keys can be time limited, which makes a lost key a less expensive problem to solve.

In accordance with one example of the present invention relates to a key issuer for an access system. The key issuer is arranged to issue user keys for access to one or a plurality of access units. Each user key comprises a signature for validation of the key issuer and credential information for verification of the user of the user key. The key issuer is arranged to provide the signature using a private encryption key of the key issuer. The key issuer is further arranged to encrypt the credential information using a public key of the access unit.

In one example, the key issuer is arranged to encrypt the credential information using an arbitrary encryption key and to encrypt the arbitrary encryption key by means of the public encryption key of the access unit.

In accordance with another example, the invention further comprises an access unit arranged to make access decisions based on the contents of a user key. The access unit comprises a memory arranged to store a private encryption key associated to the access unit and one or a plurality of public encryption keys associated to one or a plurality of authorized key issuers. The access unit further comprises an access determining unit and user input means for input of user authentication information. The access determining unit is arranged to validate a signature of the user key by means of the public issuer key of the access unit. The private key of the access unit is used to decrypt credential information of the user key. The access decision is based on the validated signature and on a comparison between authentication information comprised in the decrypted credentials and the authentication information inputted by the user.

In one example, the access determining unit is arranged to check other credential information than the authentication information and to include a result of said check in the access decision.

In accordance with one example, the access unit comprises a key generator arranged to generate the private and the public key associated to the access unit.

The present invention further relates to an access system comprising a key issuer as described above and an access unit as described above.

The present invention further relates to a method for issuing a user key for use in an access system. In accordance with one example, the method comprises providing credential information, encrypting said credential information based on a public key related to an access unit to which access is desired, producing a signature based on a private key related to the key issuer, and forming the user key based on the encrypted credential information and the produced signature.

The present invention further relates to a method for performing access decisions in an access unit. In one example, the method further comprises the steps of: receiving a user key comprising encrypted credential information and an associated signature, validating an issuer of the user key based on the received signature and a public key of the key issuer, decrypting the encrypted credential information based on a private key of the access unit, comparing at least a part of the decrypted credential information with corresponding user input data so as to verify the user, and performing the access decision based on the result of the validation step and on the verification step.

### BRIEF DESCRIPTION OF THE DRAWINGS

Fig 1 shows schematically an example of an access system.
Fig 2 is a flow chart showing the operation of a key issuer of the access system of Fig 1 for creating a user key for use in the access system.
Fig 3 is a flow chart showing the operation of an access unit of the access system in Fig 1 for determining whether access can be authorized.
Fig 4 is a flow chart showing a method for installation of the access unit in Fig 1.
Fig 5 is a block scheme showing an example of an access unit of the access system in Fig 1.
Fig 6 shows the contents of a user key in the access system if Fig 1.
Fig 7 shows a block scheme showing an example of a key issuer.

### DETAILED DESCRIPTION

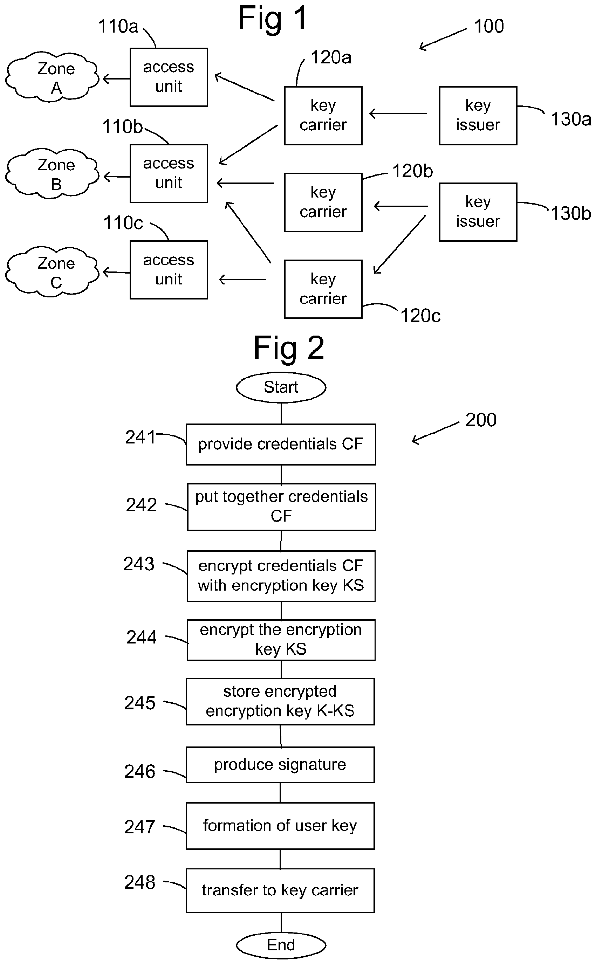

In Fig 1, an access system 100 comprises one or a plurality of access units 110a, 110b, 110c and one or a plurality of key issuers 130a, 130b. The access units 110a, 110b, 110c are in one example functioning as locks. The lock is for example arranged on a door. The lock can then authorize access to a location accessible by means of said door. In the illustrated example of Fig 1, a first access unit 110a is arranged to authorize access to a first zone A. A second access unit 110b is arranged to authorize access to a second zone B. Finally, a third access unit 110c is arranged to authorize access to a third zone C. The key issuers 130a, 130b are arranged to create user keys for use for providing access by means of said access units 110a, 110b, 110c. Each user key created by one of the key issuers is formed as information data carried by a key carrier 120a, 120b, 120c. Each user key can be uniquely designed for a user responsible for the key carrier 120a, 120b, 120c. One key carrier 120a, 120b, 120c may comprise one or a plurality of such unique keys associated to one or a plurality of locations.

In Fig 2, a method 200, used by the key issuer for creating a user key, comprises the following steps. In a first step 241, credentials *CF* are provided related to a user responsible for the key carrier. The credentials comprise in one example a PIN code or a fingerprint associated to the user to which the key carrier is belonging to. The credentials comprise in one example a user ID. The user ID can be used by the access units so as to log passage. Further, the credentials comprise in one example a date of issuance of the user key and/or a validity period for the user key. The credentials may further comprise information related to an authorization level. The authorization level indicates for example one or a plurality of authorization zones to which the user has access. Further, the user key comprises in one example a serial number associated to the user key. The serial number can be used by the access units for example so as to build up a revocation list.

In a second step 242, the credentials *CF* are put together in a credential file. Thereafter the credentials *CF* are encrypted in a third step 243 so as to provide encrypted credentials *K-CF.* In one example, the credentials *CF* is encrypted by means of symmetric encryption using an encryption key *KS.* The encryption key *KS* is in one example randomly generated. The symmetric cryptographic algorithm used is for example AES.

In a fourth step 244, the possibly randomly generated encryption key *KS* is itself encrypted. In one example the encryption key *KS* is encrypted using asymmetric encryption. The encryption key *KS* is then encrypted using a public key of that access unit to which access is desired. Examples of asymmetric encryption methods are RSA and ECC. The asymmetrically encrypted encryption key is hereinafter denoted *K-KS.* In a fifth step 245, the asymmetrically encrypted encryption key *K-KS* is stored along with the encrypted credentials *K-CF.*

In a sixth step 246, the encrypted credentials *K-CF* are signed along with the asymmetrically encrypted encryption key *K-KS.* In another example, only *the* encrypted credentials *K-CF* are signed. In yet another example the encrypted credentials *K-CF* and the asymmetrically encrypted encryption key *K-KS* are signed separately. The signature can be formed using a private key of the key issuer. In one example, the signature is provided using a cryptographic signature algorithm such as DSA or ECDSA.

In a seventh step 247, the encrypted credentials *K-CF,* the asymmetrically encrypted encryption key *K-KS* and the signature(s) are formed into the user key. In an eight step 248, the user key is transferred to a memory of the key carrier. In one example, the transfer is performed by means of a wireless communication channel such as radio or infrared communication. Further, information related to the identity of the key issuer and/or destination (dedicated access unit) of the user key can also be transferred to the memory in plain text. The memory is for example constituted on a card or in the memory of a mobile phone.

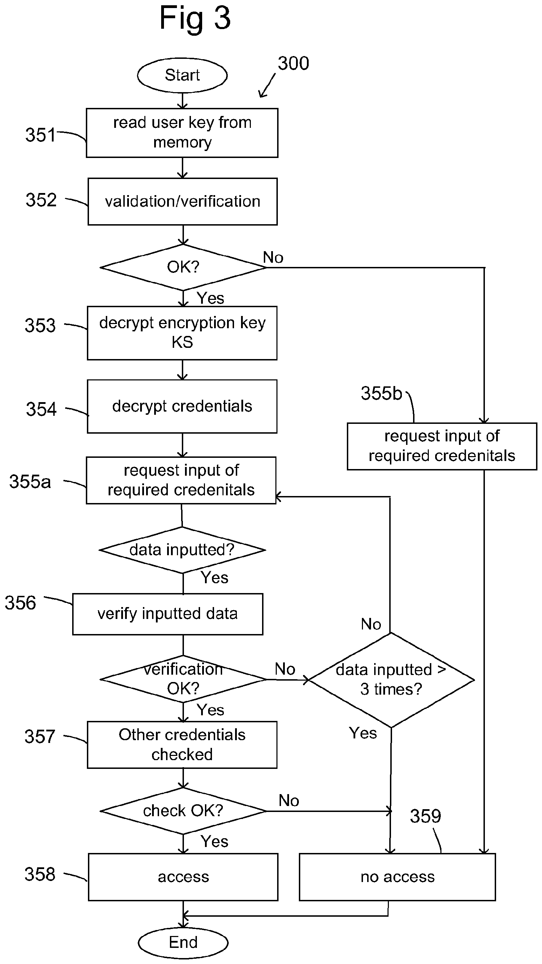

In Fig 3, one example of a method 300 used at one of the access units for determining if access is to be authorized comprises the following steps. In a first step 351, the access unit reads the user key created by the key issuer from the memory of the key carrier. As was described above, the key comprises the encrypted credentials *K-CF,* the asymmetrically encrypted encryption key *K-KS* and the associated signature(s). In case the identity of the key issuer and/or destination (dedicated access unit) of the user key has been stored in the memory in plain text, the key issuer identity and/or the destination is also read from the memory.

In a second step 352, the key issuer is verified. The verification is performed by validating the signature or signatures read from the memory in the preceding step. In the example, wherein the signature was provided using the private key of the key issuer, the validation is performed using the public key of the key issuer. The access unit is in accordance with this example arranged to store the public keys of authorized key issuers. In one example, validation is performed testing the public keys of key issuers available to the access unit on the signature(s) of the user key provided in the first step 351. In an alternative example, wherein the identity of the key issuer is stored in the memory in plain text and provided in the first step 351, the validation is performed using the public key of that key issuer. A verification of the integrity of the encrypted credentials K-CF and the asymmetrically encrypted encryption key K-KS is in one example also provided in this step by using the herein described validation procedure. If the key issuer is validated, the process proceeds to a third step 353.

In a third step 353, the encrypted encryption key *K-KS* is decrypted so as to provide the encryption key *KS* in plain text. In the example, wherein the encryption key *KS* was encrypted using the public key of the access unit, decryption is performed using a private key of the access unit. In accordance with this example, the access unit has access to its associated private key.

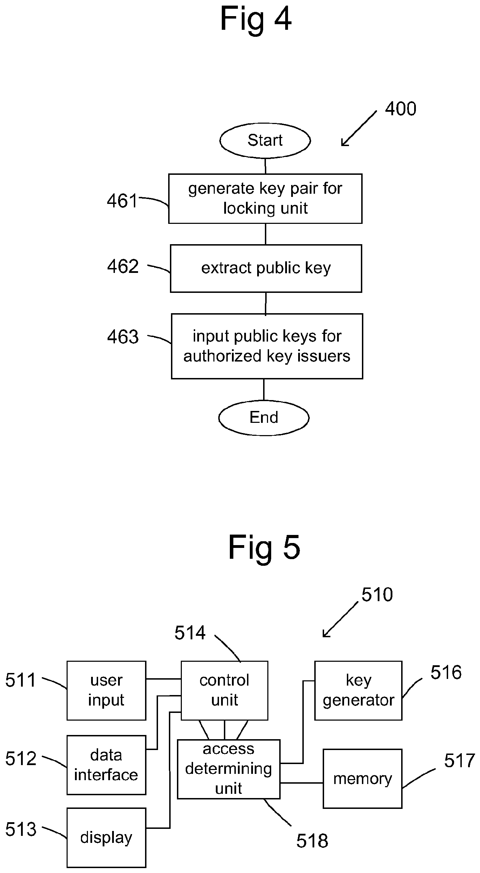

The encryption key *KS* provided in plain text in the third step 353 is used in a fourth step 354 for decrypting the credentials *CF.* The access unit is then arranged to request the user to input required credentials in a fifth step 355a. The request is for example performed by means of an input unit (see fig 5) with an associated display associated to the access unit. The requested credentials are, as was described above, for example a PIN code or a fingerprint. In the example illustrated in the Fig 3, the procedure simulates the fifth step 355a in a simulated fifth step 355b even if the key issuer could not be validated in the second step 352.

If the user has inputted the required credentials, the inputted credentials are compared to the corresponding decrypted credentials in a sixth step 356 so as to verify inputted user data. If the inputted user data is not verified, the procedure jumps back to the fifth step 355a. The repetition of the fifth 355a and sixth 356 steps (or simulated fifth step 355b) is performed a predetermined number of times before it is determined that the credentials can not be verified. If the inputted user data is verified (in the first attempt or a subsequent attempt), other decrypted credentials are checked in a seventh step 357. In one example, a validity period for the key is checked in the seventh step 357. In one example, an authorization level is checked in the seventh step 357. In an alternative or complementary example, a serial number of the key is checked against a revocation list of the access unit in the seventh step 357. If the key issuer was verified, the user inputted credentials were verified and the optional check of the other credentials was OK, access is provided in an eight step 358. In one example, the optional serial number of the user key is then registered in a log of the access unit. If the key issuer was not verified, the user inputted credentials not verified and/or the check of the other credentials was not OK, access is not authorized in a no-access step 359. In one example, the optional serial number of the user key is then registered in a revocation list.

In Fig 4, a method 400 for installing the access unit comprises the following steps. In a first step 461, a key pair is in one example externally generated and programmed into the access unit. In an alternative example, the access unit generates a key pair comprising a private and a public key. In both cases the public key is then copied to an external memory outside the access unit in a second step 462. In one example, software of the access unit is so arranged that the private key can not be copied from the access unit. Public keys of authorized key issuers are then inputted into a memory of the access unit in a third step 463. The steps are not necessarily performed in the above described order.

In Fig 5, an access unit 510 comprises a user input unit 511. An installation mode or an operation mode can be selected by means of the user input unit 510. In the installation mode of operation, an access determining unit 518 is arranged to request a key generator 516 to generate a key pair comprising a private key and a public key associated to the access unit 510. The access determining unit 518 is arranged to store the private key in a memory 517. The public key calculated by the access determining unit 518 is fed to one of a set of control units 514 (each associated to an access point to an access zone). Each control unit 514 is arranged to feed the public key calculated by the access determining unit 518 to a data interface 512 for transfer of the public key to authorized key issuers. In one example, the public key is transferred to the external unit by means of wireless or wired communication. In an alternative example, the public key of the access unit is transferred to an external memory for further transfer to dedicated key issuer(s). Further, the control unit 514 is arranged to control the data interface 512 to receive one or a plurality of public keys related to authorized key issuers. The public keys of the key issuers are stored in the memory 517 associated to the access determining unit 518. Alternatively, public keys of key issuers can be manually inputted by means of the user input unit 511. The control unit 514 is further arranged to control the data interface 512 to receive data related to revoked serial numbers of revoked user keys, if any. The memory 517 is then arranged to hold a revocation list containing information related to revoked user keys such as serial numbers. Alternatively, the information related to the revoked user keys is inputted by means of the user input unit 511.

In the operating mode of operation, one of the control units 514 associated to an access point from which access is requested, is arranged to control reception of a user key created by the key issuer and carried by the key carrier. In one example, the user key is received by means of the data interface 512. As was described above, the user key comprises the encrypted credentials *K-CF,* the asymmetrically encrypted encryption key *K-KS* and the associated signature(s). In case the identity of the key issuer is comprised in the user key preferably in plain text, the access unit 510 is in one example also arranged to receive the key issuer identity. That control unit 514 associated The access determining unit 518 is in one example arranged to store the received user key in the memory 517.

The access determining unit 518 is arranged to verify the key issuer. Accordingly, the access determining unit 518 is arranged validate the signature of the user key. In the example, wherein the signature was provided using the private key of the key issuer, the access determining unit 518 is arranged to validate the key issuer using the public key of the key issuer. The public key(s) is (are) in one example stored in the memory 517. In one example, the access determining unit 518 is arranged to validate by testing the public keys of available key issuers on the signature of the user key. The user key is as described above in one example stored in the memory 517. In an alternative example, wherein the identity of the key issuer is included in the user key, the access determining unit 518 is arranged to validate using the public key of that key issuer. A verification of the integrity of the encrypted credentials K-CF and the asymmetrically encrypted encryption key K-KS is also provided in this step by using the herein described validation procedure.

The access determining unit 518 is further arranged to decrypt the encrypted encryption key *K-KS* so as to provide the encryption key *KS* in plain text. In an example, wherein the encryption key *KS is* encrypted using the public key of the access unit, decryption is performed using the private key of the access unit. The private key of the access unit is as was described above stored in the memory 517. The access determining unit 518 further arranged to decrypt the credentials *CF* by means of the encryption key *KS.* The access determining unit 518 is further arranged to process the decrypted credentials so as to verify them against corresponding credentials inputted via the user input unit 511. The access determining unit is then arranged to perform the access decision based on the result of the validation of the key issuer and the verification of the user inputted credentials. If the validation of the key issuer and/or the verification user inputted credentials was not correct, access is denied. The optional serial number of the user key can then be stored in a revocation list of the memory 517 of the access unit 510. On the other hand, if the validation of the key issuer and/or the verification of the user inputted credentials were correct, access is allowed. The optional serial number of the user key can then be stored in a log of the memory 517 of the access unit 510.

The access determining unit 518 can also be arranged to check other decrypted credentials. The access determining unit 518 is then arranged to perform the access decision based on the result of the validation of the key issuer, the verification of the user inputted credentials and the check of the other credentials.

A display unit 513 of the access unit 510 is arranged to display a request to the user to input the above described required credentials. The display unit 513 can also be arranged to show a text indicating that access is accepted or denied.

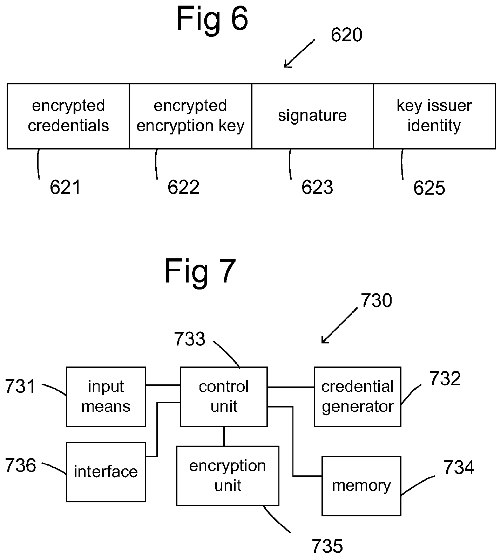

In Fig 6, a user key carrier 620 is shown comprising the user key. The user key comprises a first part 621 comprising the encrypted credentials *K-CF,* a second part 622 comprising the asymmetrically encrypted encryption key *K-KS* and a third part 623 comprising the associated signature(s). In the illustrated example, the user key comprises further a fourth part 624 comprising identity of the key issuer. The identity of the key issuer is in one example given in plain text. In one example, a memory is arranged to store the contents of the key carrier. In accordance with this example, the key carrier is a physical entity in possessed by the key user. In an alternative example, the key carrier is a signal, which can be transferred to the access unit on demand. In one example, the key carrier can be transferred from the key issuer to the access unit in response to a demand from the key user.

In Fig 7 a key issuer 730 is arranged to issue user keys for access to one or a plurality of access units. The key issuer is arranged to issue the keys so that each user key comprises a signature for validation of the key issuer and credential information for verification of the user of the user key. Further, the key issuer is arranged to provide the signature using a private encryption key of the key issuer and to encrypt the credential information using a public key of the access unit.

In detail, the key issuer 730 comprises input means 731. In one example, the user can be arranged to input for example credentials *CF* by means of the input means 731. The credentials comprise for example a PIN code, a fingerprint, user ID, a validity period for the key and/or an authorization level. Further the key issuer 730 comprises a credential generator 732 arranged to create other type of credentials such as date of issuance of the user key and/or a serial number associated to the user key. The credential generator 732 can also be arranged to generate at least some of credentials which was described to be manually inputted by means of the input means 731.

A control unit 733 is arranged to control credential data inputted by means of the input means 731 and/or generated by means of the credential generator 732 to a memory 734. In one example, the collected credentials *CF* are stored in a credential file.

An encryption unit 735 is arranged to encrypt the credentials so as to provide encrypted credentials *K-CF.* In one example, encryption unit is arranged to encrypt the credentials *CF* by means of symmetric encryption using an encryption key *KS.* The encryption key *KS* is in one example randomly generated. The symmetric cryptographic algorithm used is for example AES. In accordance with this example, the encryption unit 735 is further arranged to encrypt the possibly randomly generated encryption key *KS* for example by means of asymmetric encryption. Further, the encryption unit is arranged to provide a signature associated at least to the encrypted credentials *K-CF.* The signature can be formed using a private key of the key issuer. In one example, the signature is provided using a cryptographic signature algorithm such as DSA or ECDSA.

The control unit is arranged to control storage of the encrypted credentials *K-CF,* the asymmetrically encrypted encryption key *K-KS* and the signature(s) in the memory 735 as a user key. Alternatively, the user key is directly fed to an interface 736 for further transfer to a physical key carrier or directly to the access unit. The memory 735 comprises in one example information related to the identity of the key issuer 730. That information is in one example comprised in the user key.

In one example, the same physical entity may comprise at least one key issuer and at least one access unit.

## Claims

1. Key issuer (130a, 130b) for an access system (100), the key issuer (130a, 130b) being arranged to issue user keys for access to one or a plurality of access units (110a, 110b, 110c), each user key comprising a signature for validation of the key issuer and credential information for verification of the user of the user key, wherein the key issuer (130a, 130b) is arranged to provide the signature using a private encryption key of the key issuer, ***characterized in that*** the key issuer (130a, 130b) is arranged to form the credential information encrypted using a public key of the access unit (110a, 110b, 110c).

2. Key issuer (130a, 130b) according to claim 1, arranged to encrypt the credential information using an arbitrary encryption key and to encrypt the arbitrary encryption key by means of the public encryption key of the access unit.

3. Key carrier (120a, 120b, 120c), said key carrier being arranged to carry one or a plurality of user keys, wherein said one or a plurality of user keys comprises a signature for validation of a key issuer, which has issued the user key, and credential information for verification of the user of the key, wherein the signature is formed based on a private encryption key of the key issuer, ***characterized* in that** the credential information is encrypted with a public key of an access unit to which access is desired.

4. Key carrier (120a, 120b, 120c) according to claim 3, wherein the credential information comprises authentication information.

5. Key carried (120a, 120b, 120c) according to claim 4, wherein the authentication information comprises a PIN code.

6. Key carrier (120a, 120b, 120c) according to claim 4 or 5, wherein the authentication information comprises a fingerprint.

7. Key carrier (120a, 120b, 120c) according to any of the claims 3 to 6, wherein the credential information comprises one or a plurality of pieces of information from a group comprising a validity period for the key, issue date, user ID, authorization information and a serial number.

8. Key carrier (120a, 120b, 120c) according to any of the claims 3 to 7, wherein the key carrier comprises a memory arranged to store the user key or keys.

9. An access unit (110a, 110b, 110c; 510) arranged to make access decisions based on the contents of a user key, wherein the access unit (110a, 110b, 110c; 510) comprises
- a memory (517) arranged to store a private encryption key associated to the access unit and one or a plurality of public encryption keys associated to one or a plurality of authorized key issuers, and
- an access determining unit (518) arranged to validate a signature of the user key by means of the one or a plurality of encryption keys so as to validate the key issuer, and to decrypt credential information of the user key,
- user input means for input of user authentication information,
wherein the access determining unit is arranged to make the access decision based on the validated signature and based on a comparison between authentication information comprised in the decrypted credentials and the authentication information inputted by the user,
***characterized in* that** the credential information of the user key is encrypted and **in that** the access determining unit (518) is arranged to decrypt the credential information using the private encryption key associated to the access unit.

10. An access unit (110a, 110b, 110c; 510) according to claim 9, wherein credentials comprise other information, the access determining unit (518) is arranged to check other information of the credential information and to include a result of said check in the access decision.

11. An access unit (110a, 110b, 110c; 510) according to any of the claims 9-10, wherein the access unit comprises a key generator (516) arranged to generate the private and the public key associated to the access unit.

12. Access system (100) comprising a key issuer (130a, 130b) according to any of the claims 1-2 and an access unit (110a, 110b, 110c) according to any of the claims 9-11.

13. Access system according to claim 11, further comprising a user key carrier (120a, 120b, 120c) according to any of the claims 3-8.

14. Method (200) for issuing a user key for use in an access system, comprising
- providing (241) credential information,
- producing (246) a signature based on a private key related to the key issuer, and
- forming (247) the user key based on the credential information and the produced signature,
**characterized by** the steps of: .
- encrypting (243) said credential information based on a public key related to an access unit to which access is desired, wherein the step of forming (247) the user key comprises forming (247) the user key based on the encrypted credential information and the produced signature.

15. Method (300) for performing access decisions in an access unit comprising the steps of:
- receiving (351) encrypted credential information and an associated signature,
- validating (352) an issuer of the user key based on the received signature and a public key of the key issuer,
- decrypting (354) the encrypted credential information
- comparing (356) at least a part of the decrypted credential information with corresponding user input data so as to verify the user, and
- performing the access decision based on the result of the validation step (352) and on the verification step (356)
**characterized in that**
- the receiving (351) step comprises receiving a user key comprising said encrypted credential information and associated signature, and
- the decrypting (354) step comprises decrypting the encrypted credential information based on a private key of the access unit.

## Patentansprüche

1. Schlüsselausgeber (130a, 130b) für ein Zugangssystem (100), wobei der Schlüsselausgeber (130a, 130b) zum Ausgeben von Benutzerschlüsseln für den Zugang zu einer oder mehreren Zugangseinheiten (110a, 110b, 110c) konfiguriert ist, wobei jeder Benutzerschlüssel eine Signatur zum Validieren des Schlüsselausgebers und Anmeldeinformationen zum Verifizieren des Benutzers des Benutzerschlüssels umfasst, wobei der Schlüsselausgeber (130a, 130b) zum Bereitstellen der Signatur mithilfe eines privaten Kodierungsschlüssels des Schlüsselausgebers konfiguriert ist, ***dadurch gekennzeichnet, dass*** der Schlüsselausgeber (130a, 130b) zum Bilden der Anmeldeinformationen, die mit einem öffentlichen Schlüssel der Zugangseinheit (110a, 110b, 110c) verschlüsselt werden, konfiguriert ist.

2. Schlüsselausgeber (130a, 130b) nach Anspruch 1, der zum Verschlüsseln der Anmeldeinformationen mithilfe eines willkürlichen Kodierungsschlüssels und zum Verschlüsseln des willkürlichen Kodierungsschlüssels mittels des öffentlichen Kodierungsschlüssels der Zugangseinheit konfiguriert ist.

3. Schlüsselträger (120a, 120b, 120c), wobei der Schlüsselträger zum Tragen eines oder mehrerer Benutzerschlüssel konfiguriert ist, wobei der eine oder die mehreren Benutzerschlüssel eine Signatur zum Validieren eines Schlüsselausgebers, der den Benutzerschlüssel ausgestellt hat, und Anmeldeinformationen zum Verifizieren des Benutzers des Schlüssels umfassen, wobei die Signatur auf der Grundlage eines privaten Kodierungsschlüssels des Schlüsselausgebers gebildet wird, ***dadurch gekennzeichnet, dass*** die Anmeldeinformationen mit einem öffentlichen Schlüssel einer Zugangseinheit, zu der Zugang gewünscht wird, verschlüsselt werden.

4. Schlüsselträger (120a, 120b, 120c) nach Anspruch 3, wobei die Anmeldeinformationen Authentifizierungsinformationen umfassen.

5. Schlüsselträger (120a, 120b, 120c) nach Anspruch 4, wobei die Authentifizierungsinformationen einen PIN-Code umfassen.

6. Schlüsselträger (120a, 120b, 120c) nach Anspruch 4 oder 5, wobei die Authentifizierungsinformationen einen Fingerabdruck umfassen.

7. Schlüsselträger (120a, 120b, 120c) nach einem der Ansprüche 3 bis 6, wobei die Anmeldeinformationen ein oder mehrere Stücke an Informationen von einer Gruppe, umfassend einen Gültigkeitszeitraum für den Schlüssel, ein Ausstellungsdatum, eine Benutzer-ID, Berechtigungsinformationen und eine Seriennummer umfassen.

8. Schlüsselträger (120a, 120b, 120c) nach einem der Ansprüche 3 bis 7, wobei der Schlüsselträger einen Speicher umfasst, der zum Speichern des oder der Benutzerschlüssel konfiguriert ist.

9. Zugangseinheit (110a, 110b, 110c; 510), die zum Treffen von Zugangsentscheidungen auf der Grundlage der Inhalte eines Benutzerschlüssels konfiguriert ist, wobei die Zugangseinheit (110a, 110b, 110c; 510) Folgendes umfasst
- einen Speicher (517), der zum Speichern eines mit der Zugangseinheit verbundenen, privaten Kodierungsschlüssels und eines oder mehrerer öffentlicher Kodierungsschlüssel, die mit einem oder mehreren autorisierten Schlüsselausgebern verbunden sind, konfiguriert ist, und
- eine Zugangsbestimmungseinheit (518), die zum Validieren einer Signatur des Benutzerschlüssels mittels des einen oder der mehreren Kodierungsschlüssel konfiguriert ist, um den Schlüsselausgeber zu validieren und die Anmeldeinformationen des Benutzerschlüssels zu entschlüsseln,
- Benutzereingabemittel zum Eingeben von Benutzerauthentifizierungsinformationen, wobei die Zugangsbestimmungseinheit zum Treffen der Zugangsentscheidung auf der Grundlage der validierten Signatur und auf der Grundlage eines Vergleichs zwischen Authentifizierungsinformationen, die in den entschlüsselten Anmeldeinformationen enthalten sind, und den vom Benutzer eingegebenen Authentifizierungsinformationen konfiguriert ist, ***dadurch gekennzeichnet, dass*** die Anmeldeinformationen des Benutzerschlüssels verschlüsselt sind, und dass die Zugangsbestimmungseinheit (518) zum Entschlüsseln der Anmeldeinformationen mithilfe des privaten Kodierungsschlüssels, der mit der Zugangseinheit verbunden ist, konfiguriert ist.

10. Zugangseinheit (110a, 110b, 110c; 510) nach Anspruch 9, wobei Anmeldeinformationen andere Informationen umfassen, wobei die Zugangsbestimmungseinheit (518) zum Überprüfen anderer Informationen der Anmeldeinformationen und zum Einbeziehen eines Ergebnisses der Überprüfung in die Zugangsentscheidung konfiguriert ist.

11. Zugangseinheit (110a, 110b, 110c; 510) nach einem der Ansprüche 9-10, wobei die Zugangseinheit einen Schlüsselgenerator (516) umfasst, der zum Erzeugen des privaten und des öffentlichen Schlüssels im Zusammenhang mit der Zugangseinheit konfiguriert ist.

12. Zugangssystem (100), umfassend einen Schlüsselausgeber (130a, 130b) nach einem der Ansprüche 1-2 und eine Zugangseinheit (110a, 110b, 110c) nach einem der Ansprüche 9-11.

13. Zugangssystem nach Anspruch 11, ferner umfassend einen Benutzerschlüsselträger (120a, 120b, 120c) nach einem der Ansprüche 3-8.

14. Verfahren (200) zum Ausgeben eines Benutzerschlüssels zum Gebrauch in einem Zugangssystem, umfassend
- Bereitstellen (241) von Anmeldeinformationen,
- Erstellen (246) einer Signatur auf der Grundlage eines privaten Schlüssels, der mit dem Schlüsselausgeber verbunden ist, und
- Bilden (247) des Benutzerschlüssels auf der Grundlage der Anmeldeinformationen und der erstellten Signatur,
**durch** die folgenden Schritte **gekennzeichnet:**
- Verschlüsseln (243) der Anmeldeinformationen auf der Grundlage eines öffentlichen Schlüssels, der mit einer Zugangseinheit verbunden ist, zu der Zugang gewünscht wird, wobei der Schritt des Bildens (247) des Benutzerschlüssels das Bilden (247) des Benutzerschlüssels auf der Grundlage der verschlüsselten Anmeldeinformationen und der erstellten Signatur umfasst.

15. Verfahren (300) zum Treffen von Zugangsentscheidungen in einer Zugangseinheit, das die folgenden Schritte umfasst:
- Empfangen (351) verschlüsselter Anmeldeinformationen und einer damit verbundenen Signatur,
- Validieren (352) eines Ausgebers des Benutzerschlüssels auf der Grundlage der empfangenen Signatur und eines öffentlichen Schlüssels des Schlüsselausgebers,
- Entschlüsseln (354) der verschlüsselten Anmeldeinformationen
- Vergleichen (356) mindestens eines Teils der entschlüsselten Anmeldeinformationen mit entsprechenden Benutzereingabedaten, um den Benutzer zu verifizieren, und
- Treffen der Zugangsentscheidung auf der Grundlage des Ergebnisses des Validierungsschritts (352) und des Verifizierungsschritts (356), ***dadurch gekennzeichnet, dass***
- der Schritt des Empfangens (351) das Empfangen eines Benutzerschlüssels umfasst, der die verschlüsselten Anmeldeinformationen und die damit verbundene Signatur umfasst, und
- der Schritt des Entschlüsselns (354) das Entschlüsseln der verschlüsselten Anmeldeinformationen auf der Grundlage eines privaten Schlüssels der Zugangseinheit umfasst.

## Revendications

1. Émetteur de clé (130a, 130b) pour un système d'accès (100), l'émetteur de clé (130a, 130b) étant disposé pour émettre des clés utilisateur pour accéder à une ou à une pluralité d'unités d'accès (110a, 110b, 110c), chaque clé utilisateur comprenant une signature pour validation de l'émetteur de clé et des informations de justificatif d'identité pour vérification de l'utilisateur de la clé utilisateur, dans lequel l'émetteur de clé (130a, 130b) est disposé pour fournir la signature en utilisant une clé de chiffrement privée de l'émetteur de clé, **caractérisé en ce que** l'émetteur de clé (130a, 130b) est disposé pour former les informations de justificatif d'identité chiffrées en utilisant une clé publique de l'unité d'accès (110a, 110b, 110c).

2. Émetteur de clé (130a, 130b) selon la revendication 1, disposé pour chiffrer les informations de justificatif d'identité en utilisant une clé de chiffrement arbitraire et pour chiffrer la clé de chiffrement arbitraire au moyen de la clé de chiffrement publique de l'unité d'accès.

3. Porteur de clé (120a, 120b, 120c), ledit porteur de clé étant disposé pour porter une ou une pluralité de clés utilisateur, dans lequel ladite clé utilisateur ou pluralité de clés utilisateur comprend une signature pour validation d'un émetteur de clé, qui a émis la clé utilisateur et des informations de justificatif d'identité pour vérification de l'utilisateur de la clé, dans lequel la signature est formée sur la base d'une clé de chiffrement privée de l'émetteur de clé, **caractérisé en ce que** les informations de justificatif d'identité sont chiffrées avec une clé publique d'une unité d'accès à laquelle un accès est souhaité.

4. Porteur de clé (120a, 120b, 120c) selon la revendication 3, dans lequel les informations de justificatif d'identité comprennent des informations d'authentification.

5. Porteur de clé (120a, 120b, 120c) selon la revendication 4, dans lequel les informations d'authentification comprennent un code PIN.

6. Porteur de clé (120a, 120b, 120c) selon la revendication 4 ou 5, dans lequel les informations d'authentification comprennent une empreinte digitale.

7. Porteur de clé (120a, 120b, 120c) selon l'une quelconque des revendications 3 à 6, dans lequel les informations de justificatif d'identité comprennent une ou une pluralité de pièces d'informations parmi un groupe comprenant une période de validité pour la clé, une date d'émission, un identifiant d'utilisateur, des informations d'autorisation et un numéro de série.

8. Porteur de clé (120a, 120b, 120c) selon l'une quelconque des revendications 3 à 7, dans lequel le porteur de clé comprend une mémoire disposée pour stocker la clé ou les clés utilisateur.

9. Unité d'accès (110a, 110b, 110c ; 510) configurée pour prendre des décisions d'accès sur la base du contenu d'une clé utilisateur, dans laquelle l'unité d'accès (110a, 110b, 110c ; 510) comprend
- une mémoire (517) disposée pour stocker une clé de chiffrement privée associée à l'unité d'accès et une ou une pluralité de clés de chiffrement publiques associées à un ou une pluralité d'émetteurs de clé autorisés et
- une unité de détermination d'accès (518) disposée pour valider une signature de la clé utilisateur au moyen d'une ou d'une pluralité de clés de chiffrement de façon à valider l'émetteur de clé et à déchiffrer les informations de justificatif d'identité de la clé utilisateur,
- un moyen d'entrée utilisateur pour la saisie d'informations d'authentification d'utilisateur,
dans laquelle l'unité de détermination d'accès est disposée pour prendre la décision d'accès sur la base de la signature validée et sur la base d'une comparaison entre les informations d'authentification comprises dans les justificatifs d'identité déchiffrés et les informations d'authentification saisies par l'utilisateur, **caractérisée en ce que** les informations de justificatif d'identité de la clé utilisateur sont chiffrées et **en ce que** l'unité de détermination d'accès (518) est disposée pour déchiffrer les informations de justificatif d'identité en utilisant la clé de chiffrement privée associée à l'unité d'accès.

10. Unité d'accès (110a, 110b, 110c ; 510) selon la revendication 9, dans laquelle les justificatifs d'identité comprennent d'autres informations, l'unité de détermination d'accès (518) est disposée pour vérifier les autres informations des informations de justificatif d'identité et pour inclure un résultat de ladite vérification dans la décision d'accès.

11. Unité d'accès (110a, 110b, 110c ; 510) selon l'une quelconque des revendications 9 à 10, dans laquelle l'unité d'accès comprend un générateur de clé (516) disposé pour générer la clé privée et la clé publique associées à l'unité d'accès.

12. Système d'accès (100) comprenant un émetteur de clé (130a, 130b) selon l'une quelconque des revendications 1 à 2 et une unité d'accès (110a, 110b, 110c) selon l'une quelconque des revendications 9 à 11.

13. Système d'accès selon la revendication 11, comprenant en outre un porteur de clé utilisateur (120a, 120b, 120c) selon l'une quelconque des revendications 3 à 8.

14. Procédé (200) pour émettre une clé utilisateur pour une utilisation dans un système d'accès, comprenant
- la fourniture (241) d'informations de justificatif d'identité,
- la production (246) d'une signature sur la base d'une clé privée se rapportant à l'émetteur de clé et
- la formation (247) de la clé utilisateur sur la base des informations de justificatif d'identité et de la signature produite,
**caractérisé par** les étapes consistant à :
- chiffrer (243) lesdites informations de justificatif d'identité sur la base d'une clé publique se rapportant à une unité d'accès à laquelle l'accès est souhaité, dans lequel l'étape de formation (247) de la clé utilisateur comprend la formation (247) de la clé utilisateur sur la base des informations de justificatif d'identité chiffrées et de la signature produite.

15. Procédé (300) pour la prise de décisions d'accès dans une unité d'accès, comprenant les étapes consistant à :
- recevoir (351) des informations de justificatif d'identité chiffrées et une signature associée,
- valider (352) un émetteur de la clé utilisateur sur la base de la signature reçue et d'une clé publique de l'émetteur de clé,
- déchiffrer (354) les informations de justificatif d'identité chiffrées
- comparer (356) au moins une partie des informations de justificatif d'identité déchiffrées avec des données correspondantes de saisie de l'utilisateur de façon à vérifier l'utilisateur et
- prendre la décision d'accès sur la base du résultat de l'étape de validation (352) et de l'étape de vérification (356)
**caractérisé en ce que**
- l'étape de réception (351) comprend la réception d'une clé utilisateur comprenant lesdites informations de justificatif d'identité chiffrées et une signature associée et
- l'étape de déchiffrement (354) comprend le déchiffrement des informations de justificatif d'identité chiffrées sur la base d'une clé privée de l'unité d'accès.
